# EUROPEAN PATENT APPLICATION

(11) **EP 3 845 488 A1**
(43) Date of publication of application: **07.07.2021**
(21) Application number: 18905887.8
(22) Date of filing: 30.08.2018
(51) Int. Cl.: C01B 11/02, C01D 5/00

(54) **METHOD FOR PREPARING HIGH-PURITY CHLORINE DIOXIDE USING COMBINATION OF METHYL ALCOHOL AND HYDROGEN PEROXIDE AS REDUCING AGENT**

(71) Applicant: Guangxi Bossco Environmental Protection Tcchnology, Nanning, Guangxi 530007 (CN)
(72) Inventor: WANG, Shuangfei, Nanning, Guangxi 530007 (CN); ZHAN, Lei, Nanning, Guangxi 530007 (CN); HUANG, Binggui, Nanning, Guangxi 530007 (CN); XU, Cuisheng, Nanning, Guangxi 530007 (CN); LIU, Liangqing, Nanning, Guangxi 530007 (CN); LI, Zhongping, Nanning, Guangxi 530007 (CN); TAN, Lang, Nanning, Guangxi 530007 (CN)
(74) Representative: Haseltine Lake Kempner LLP
(86) International application number: PCT/CN2018/000307
(87) International publication number: WO 2020/041916

(57) **Abstract**

The present disclosure discloses a method of preparing high-purity chlorine dioxide by reduction using a combination of methanol and hydrogen peroxide. The method includes: injecting concentrated sulfuric acid and sodium chlorate solution into a generator to form a reaction mother liquid, and maintaining the reaction mother liquid at a certain acidity, temperature, and content of sodium chlorate; then adding a reducing agent combined with methanol and hydrogen peroxide to produce chlorine dioxide gas and by-product neutral mirabilite; and cooling the chlorine dioxide gas and then absorbing the chlorine dioxide gas by a low-temperature chilled water to obtain an aqueous solution of chlorine dioxide, and recycling the by-product. The chlorine dioxide solution produced by the method of the present disclosure has a 60% to 70% reduction in Cl₂ content and 14% to 20% reduction in sulfuric acid consumption than that of chlorine dioxide produced by using a single methanol reducing agent. In addition, the by-product produced is neutral mirabilite, which does not require neutralization of acidic mirabilite.

## Description

### TECHNICAL FIELD

The present disclosure relates to a method of preparing chlorine dioxide, and more particularly to a method of preparing high-purity chlorine dioxide by reduction using a combination of methanol and hydrogen peroxide.

### BACKGROUND

Chlorine dioxide (ClO₂) is an orange-yellow gas at normal temperature and pressure, and has a pungent smell similar to a mixture of chlorine and ozone. Chlorine dioxide has a boiling point of 11 °C, a freezing point of -59 °C, and a gas density of 3.09 g/m³ at a temperature of 11 °C. Gaseous ClO₂ is unstable, and when exposed to light or in contact with organic matter at a high concentration, the gaseous ClO₂ may cause explosive decomposition to produce oxygen and chlorine. In general, ClO₂ is prepared and used on site. At room temperature, ClO₂ is relatively stable when diluted with air or water vapor to a volume less than 12% or in a low-temperature aqueous solution, and the solubility in water decreases as the temperature increases. ClO₂ has a strong oxidizing capacity and can be used as a bleaching agent for pulp and textiles, a water treatment agent, a novel air purifying freshener, and a disinfectant for diet, epidemic prevention, and sanitation.

At present, the commonly used method for industrially preparing chlorine dioxide is mainly the sodium chlorate method, which mainly uses methanol, hydrochloric acid, sodium chloride, hydrogen peroxide, or sulfur dioxide as a reducing agent. The preparation method in which methanol is used as the reducing agent is currently the dominant production method. The method has high production efficiency, but the product contains a certain amount of chlorine gas, and the sulfuric acid consumption is high. In addition, the produced by-product, acidic mirabilite, needs to be neutralized before it can be recycled.

### SUMMARY

A technical problem to be solved by the present disclosure is to provide a method of preparing chlorine dioxide by reduction using a combination of methanol and hydrogen peroxide, which can improve the purity of the product and directly crystallize a by-product mirabilite produced by a reaction in a form of neutral mirabilite, and reduce the consumption of sulfuric acid.

The present disclosure solves the aforementioned technical problems in accordance with the following technical solutions:

The method of preparing high-purity chlorine dioxide by reduction using a combination of methanol and hydrogen peroxide in accordance with the present disclosure includes the following steps:

In the first step: injecting concentrated sulfuric acid and sodium chlorate solution into a generation system to form a reaction mother liquid, and maintaining the reaction mother liquid at an acidity of 5.8 N to 6.2 N, a content of sodium chlorate at 234 g/L to 266 g/l, and a temperature at 69 °C to 73 °C. The generation system consists of a reactor and a reboiler connected by a circulation pipe.

In the second step: adding a reducing agent into the reaction mother liquid to produce chlorine dioxide gas and by-product neutral mirabilite. The reducing agent is a combined reducing agent made of methanol and hydrogen peroxide, and a ratio of methanol to hydrogen peroxide in the combined reducing agent is, by mass percentage, 60% to 70% of methanol: 30% to 40% of hydrogen peroxide.

In the third step: cooling the chlorine dioxide gas produced by a reaction, then absorbing the chlorine dioxide gas by a low-temperature chilled water at a temperature of 4 °C to 10 °C to obtain an aqueous solution of chlorine dioxide, and filtering, washing, and recycling the by-product neutral mirabilite.

In the second step in accordance with the present disclosure, prior to adding the methanol of the reducing agent, the methanol is diluted with demineralized water to a methanol solution having a volume concentration of 20%, and then the methanol solution is added through a venturi tube at an outlet of the reboiler.

In the second step in accordance with the present disclosure, prior to adding the hydrogen peroxide of the reducing agent, the hydrogen peroxide is prepared to a hydrogen peroxide solution having a mass concentration of 30%, and then mixed with the sodium chlorate solution, and then added through an inlet of the reboiler.

In the second step in accordance with the present disclosure, a preferred ratio of the methanol to the hydrogen peroxide in the combined reducing agent is, by mass percentage, 66% of methanol: 34% of hydrogen peroxide.

In the first step in accordance with the present disclosure, the reactor is maintained vacuum and has a pressure of -78 kPa to -82 kPa.

In the third step in accordance with the present disclosure, the chlorine dioxide gas is discharged from a top of the reactor, and a mixed gas of the chlorine dioxide gas and the water vapor generated by the reactor has a temperature of 57 °C to 68 °C and is initially cooled to a temperature of 38 °C to 45 °C by an intercooler, and then enters a chlorine dioxide absorption tower and is absorbed to form the aqueous solution of chlorine dioxide by spraying the chilled water.

According to the method of the present disclosure, the concentrated sulfuric acid and the sodium chlorate solution are first injected into a generator to form the reaction mother liquid. The reaction mother liquid is maintained a certain acidity, temperature, and content of sodium chlorate. Then, the reducing agent is added to produce chlorine dioxide gas and by-product neutral mirabilite. The chlorine dioxide gas is cooled and then absorbed by the low-temperature chilled water to obtain an aqueous solution of chlorine dioxide, and the by-product is filtered, washed, and recycled.

A reaction principle of the present disclosure for producing chlorine dioxide:

ClO₃⁻ + Cl⁻ + H⁺ → ClO₂ + Cl•+ H₂O (1)

Cl•+ Cl• → Cl₂ (2)

Cl•+CH₃OH → Cl⁻ + H₂O + COOH⁻ (3)

H₂O₂ + Cl₂ → H⁺ + Cl⁻ + O₂ (4)

Sodium chlorate reacts in an acidic medium (1) to produce chlorine dioxide gas and chlorine radicals. Methanol is used as a reducing agent and reacts with the chlorine radicals in accordance with the reaction (3) to convert chlorine radicals into chloride ions, thereby reducing or avoiding the reaction (2) of the chlorine radicals to produce chlorine gas, so that the chloride ions can be reused throughout the reaction process. However, in actual production, since the reaction rate of the reaction (3) is insufficient to completely convert all of the chlorine radicals into the chloride ions, the purity of chlorine dioxide prepared by using methanol alone as a reducing agent is not high. The present disclosure adds hydrogen peroxide together with methanol as the reducing agent to prepare chlorine dioxide, chlorine gas is reduced to chloride ions by hydrogen peroxide through reaction (4), thereby greatly reducing the production of chlorine gas and improving the purity of chlorine dioxide gas.

The method of the present disclosure adopts a combined reducing agent made of methanol and hydrogen peroxide in a reasonable proportion. The combined reducing agent reacts with sodium chlorate in a titanium container under strong acid, a certain temperature, and a vacuum condition to continuously produce high-purity chlorine dioxide and by-product neutral mirabilite. After cooling, ClO₂ gas is absorbed by a low-temperature chilled water to obtain a ClO₂ solution having a certain concentration, and the by-product is filtered, washed, and recycled.

The chlorine dioxide produced by the method of the present disclosure has a higher purity than that of the chlorine dioxide produced by using methanol alone as a reducing agent, and the Cl₂ content in the chlorine dioxide is reduced by 60% to 70%. In addition, the by-product produced is neutral mirabilite, which does not require neutralization of acidic mirabilite, and the sulfuric acid consumption is reduced by 14% to 20%.

### BRIEF DESCRIPTION OF THE DRAWINGS

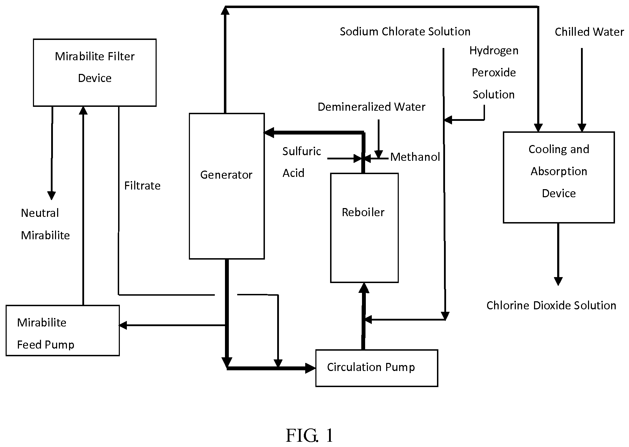

FIG. 1 is a flowchart of a production process of a method in accordance with the present disclosure.

### DETAILED DESCRIPTION OF THE EMBODIMENTS

The method of the present disclosure will be further described below with reference to the accompanying drawings and examples:

The process flow adopted by the method of the present disclosure is as shown in FIG. 1: concentrated sulfuric acid enters a generator from one side of a venturi tube of an outlet of a reboiler, and methanol is diluted with demineralized water and then enters the generator from the other side of the venturi tube. The hydrogen peroxide is mixed with the sodium chlorate solution and then enters the reboiler at an outlet pipe of the circulation pump, and enters the generator through the reboiler. The reaction liquid continuously circulates between the generator and a circulation pipe under an action of the circulation pump, and the reaction mother liquid is heated by the reboiler to maintain a temperature required for the reaction. The generator and the reboiler are connected through the circulation pipe to form a circulation circuit.

With the addition of raw materials such as methanol and hydrogen peroxide, chlorine dioxide is continuously produced in the generator. The chlorine dioxide and the evaporated water vapor are discharged from a top of the generator into an intercooler, cooled by the intercooler, and then enter a chlorine dioxide absorption tower (the intercooler and the chlorine dioxide absorption tower are combined to form a cooling and absorption device). Chilled water is added into the chlorine dioxide absorption tower to absorb chlorine dioxide to form the aqueous solution of chlorine dioxide.

The solid content in the generator is controlled to a certain concentration range, and the produced neutral mirabilite is pumped out together with the mother liquid through a bottom of the generator by a mirabilite feed pump, and sent to a mirabilite filter device for filtration, and recycled after washing. The filtered mother liquid is returned to the generator.

In the present disclosure, the methanol is designed to be added at the venturi tube at the outlet of the reboiler of the reboiler outlet, and the hydrogen peroxide is designed to be added between the inlet of the reboiler and the outlet of the circulation pump.

### Example 1:

186 kg of concentrated sulfuric acid having a mass concentration of 98% and 547 kg of sodium chlorate solution having a mass concentration of 30% were injected into a generator to form a reaction mother liquid, which was circulated in a circulation pipe of the generator under an action of a circulation pump, and maintained at an acidity of 5.8 N to 6.2 N and a content of sodium chlorate at 234 g/L to 266 g/l. The heat was transferred to the reaction mother liquid by a reboiler to maintain a temperature of 69 °C to 73°C. 44.8 kg of methanol solution having a concentration of 20% (v/v) and 16.3 kg of hydrogen peroxide solution having a concentration of 30% (w/w) were successively and uniformly injected into the generator to produce chlorine dioxide, respectively. The generator was maintained under vacuum and had a pressure of -78 kPa(g) to -82 kPa(g). Under a negative pressure condition, a mixed gas of the chlorine dioxide gas and water vapor discharged from the generator had a temperature of 57 °C to 68 °C, and was initially cooled to a temperature of 38 °C to 45 °C by an intercooler. The gas entered a chlorine dioxide absorption tower and was absorbed to form an aqueous solution of chlorine dioxide by spraying chilled water at a temperature of 4 °C to 10 °C. By-products continuously formed precipitated crystals in the mother liquid as the reaction progressed. In order to maintain a volume percentage of solids in the reaction liquid as 18% to 23%, the mother liquid containing mirabilite was pumped out from a bottom of the generator, and the by-product neutral mirabilite was filtered out by a filter device, and the filtered filtrate was returned to the generator. The chlorine dioxide solution produced had a concentration of 9.4 g/l, Cl₂ content in the solution was 0.08 g/l, and sulfuric acid consumption was 0.86t/tClO₂.

### Example 2:

186 kg of concentrated sulfuric acid having a mass concentration of 98% and 547 kg of sodium chlorate solution having a mass concentration of 30% were injected into a generator to form a reaction mother liquid, which was circulated in a circulation pipe of the generator under an action of a circulation pump, and maintained at an acidity of 5.8 N to 6.2 N and a content of sodium chlorate at 234 g/L to 266 g/l. The heat was transferred to the reaction mother liquid by a reboiler to maintain a temperature of 69 °C to 73°C. 46.5 kg of methanol solution having a concentration of 20% (v/v) and 14.3 kg of hydrogen peroxide solution having a concentration of 30% (w/w) were successively and uniformly injected into the generator to produce chlorine dioxide, respectively. The generator was maintained under vacuum and had a pressure of -78 kPa(g) to -82 kPa(g). Under a negative pressure condition, a mixed gas of the chlorine dioxide gas and water vapor discharged from the generator had a temperature of 57 °C to 68 °C, and was initially cooled to a temperature of 38 °C to 45 °C by an intercooler. The gas entered a chlorine dioxide absorption tower and was absorbed to form an aqueous solution of chlorine dioxide by spraying chilled water at a temperature of 4 °C to 10 °C. By-products continuously formed precipitated crystals in the mother liquid as the reaction progressed. In order to maintain a volume percentage of solids in the reaction liquid as 18% to 23%, the mother liquid containing mirabilite was pumped out from a bottom of the generator, and the by-product neutral mirabilite was filtered out by a filter device, and the filtered filtrate was returned to the generator. The chlorine dioxide solution produced had a concentration of 9.5 g/l, Cl₂ content in the solution was 0.09 g/l, and sulfuric acid consumption was 0.87t/tClO₂.

### Example 3:

186 kg of concentrated sulfuric acid having a mass concentration of 98% and 547 kg of sodium chlorate solution having a mass concentration of 30% were injected into a generator to form a reaction mother liquid, which was circulated in a circulation pipe of the generator under an action of a circulation pump, and maintained at an acidity of 5.8 N to 6.2 N and a content of sodium chlorate at 234 g/L to 266 g/l. The heat was transferred to the reaction mother liquid by a reboiler to maintain a temperature of 69 °C to 73°C. 45 kg of methanol solution having a concentration of 20% (v/v) and 12.6 kg of hydrogen peroxide solution having a concentration of 30% (w/w) were successively and uniformly injected into the generator to produce chlorine dioxide, respectively. The generator was maintained under vacuum and had a pressure of -78 kPa(g) to -82 kPa(g). Under a negative pressure condition, a mixed gas of the chlorine dioxide gas and water vapor discharged from the generator had a temperature of 57 °C to 68 °C, and was initially cooled to a temperature of 38 °C to 45 °C by an intercooler. The gas entered a chlorine dioxide absorption tower and was absorbed to form an aqueous solution of chlorine dioxide by spraying chilled water at a temperature of 4 °C to 10 °C. By-products continuously formed precipitated crystals in the mother liquid as the reaction progressed. In order to maintain a volume percentage of solids in the reaction liquid as 18% to 23%, the mother liquid containing mirabilite was pumped out from a bottom of the generator, and the by-product neutral mirabilite was filtered out by a filter device, and the filtered filtrate was returned to the generator. The chlorine dioxide solution produced had a concentration of 9.3 g/l, Cl₂ content in the solution was 0.07 g/l, and sulfuric acid consumption was 0.87t/tClO₂.

## Claims

1. A method of preparing high-purity chlorine dioxide by reduction using a combination of methanol and hydrogen peroxide, comprising the following steps of:
in the first step: injecting concentrated sulfuric acid and sodium chlorate solution into a generation system to form a reaction mother liquid, and maintaining the reaction mother liquid at an acidity of 5.8 N to 6.2 N, a content of sodium chlorate at 234 g/L to 266 g/l,
and a temperature at 69 °C to 73 °C; wherein the generation system consists of a reactor and a reboiler connected by a circulation pipe;
in the second step: adding a reducing agent into the reaction mother liquid to produce chlorine dioxide gas and by-product neutral mirabilite; wherein the reducing agent is a combined reducing agent made of methanol and hydrogen peroxide, a ratio of methanol to hydrogen peroxide in the combined reducing agent is, by mass percentage, 60% to 70% of methanol: 30% to 40% of hydrogen peroxide; and
in the third step, cooling the chlorine dioxide gas produced by a reaction, then absorbing the chlorine dioxide gas by a low-temperature chilled water at a temperature of 4 °C to 10 °C to obtain an aqueous solution of chlorine dioxide, and filtering, washing, and recycling the by-product neutral mirabilite.

2. The method of preparing high-purity chlorine dioxide by reduction using the combination of methanol and hydrogen peroxide according to claim 1, wherein in the second step, prior to adding the methanol of the reducing agent, the method comprises diluting the methanol with demineralized water to a methanol solution having a volume concentration of 20%, and then adding the methanol solution through a venturi tube at an outlet of the reboiler.

3. The method of preparing high-purity chlorine dioxide by reduction using the combination of methanol and hydrogen peroxide according to claim 1 or 2, wherein in the second step, prior to adding the hydrogen peroxide of the reducing agent, the method comprises preparing the hydrogen peroxide to a hydrogen peroxide solution having a mass concentration of 30%, mixing the hydrogen peroxide solution with the sodium chlorate solution, and then adding the hydrogen peroxide solution and the sodium chlorate solution through an inlet of the reboiler.

4. The method of preparing high-purity chlorine dioxide by reduction using the combination of methanol and hydrogen peroxide according to claim 1 or 2, wherein in the first step, the reactor is maintained vacuum and has a pressure of -78 kPa to -82 kPa.

5. The method of preparing high-purity chlorine dioxide by reduction using the combination of methanol and hydrogen peroxide according to claim 1 or 2, wherein in the third step, the chlorine dioxide gas is discharged from a top of the reactor, and a mixed gas of the chlorine dioxide gas and the water vapor generated by the reactor has a temperature of 57 °C to 68 °C and is initially cooled to a temperature of 38 °C to 45 °C by an intercooler, and then enters a chlorine dioxide absorption tower and is absorbed to form the aqueous solution of chlorine dioxide by spraying the chilled water.

6. The method of preparing high-purity chlorine dioxide by reduction using the combination of methanol and hydrogen peroxide according to claim 1 or 2, wherein in the second step, a preferred ratio of the methanol to the hydrogen peroxide in the combined reducing agent is, by mass percentage, 66% of methanol: 34% of hydrogen peroxide.
